# EUROPEAN PATENT APPLICATION

(11) **EP 4 095 780 A1**
(43) Date of publication of application: **30.11.2022**
(21) Application number: 21745109.5
(22) Date of filing: 19.01.2021
(51) Int. Cl.: G06Q 10/10

(54) **INFORMATION PROCESSING DEVICE, METHOD, AND PROGRAM**

(30) Priority: 20.01.2020 JP 2020007063
(71) Applicant: Matchbox Technologies, Inc., Niigata-shi, Niigata, 950-0945 (JP)
(72) Inventor: SATO, Takashi, Niigata-shi, Niigata 950-0945 (JP)
(74) Representative: AWA Sweden AB
(86) International application number: PCT/JP2021/001546
(87) International publication number: WO 2021/149652

(57) **Abstract**

A server 20 of a shift adjustment system 1 includes, as functions thereof: a shift information reception module 2033 that receives entry information on a preferred shift from an inside employee employed by a business operator or an outside person with experience; a shift information presentation module 2034 that presents the business operator with the shift information that is distinguished by inside employee, outside person with experience, and outside job applicant; and a selection module 2036 that receives entry information for the business operator referring to job application information to select a job applicant to actually work.

## Description

### TECHNICAL FIELD

The present disclosure relates to an information processing device, method, and program.

### BACKGROUND ART

Retailers such as supermarkets and convenience stores often employ non-regular workers such as temporaries and part-timers as store clerks. Many of these non-regular workers such as temporaries and part-timers are students, housewives, so-called senior workers who have already retired from their companies, and people who work at another jobs in addition to their main jobs. Since such workers often wish to work only short hours at their own convenience, operators and managers of the retailers as mentioned above coordinate the work shifts desired by the temporaries or part-timers to ensure that the labor force required is available.

However, depending on time slots, there may be cases where the required labor force is not available. In addition, because of the recent shortage of workers, it has been becoming increasingly difficult to secure workers. For this reason, employment sharing that promotes so-called daily employment, in which, for example, people work for a short period of time, specifically only for one day, or for a short time, specifically only for four hours, is becoming increasingly common.

For the realization of such employment sharing, Patent Literature 1 discloses a job matching system that supports matching job seekers with employers (business operators or managers). This job matching system is a system that supports matching especially for day jobs, which can expedite the distribution of job offer information, assisted selection of appropriate personnel, conclusion of contracts for actual employment, and subsequent services of the job seekers.

### CITATION LIST

### PATENT LITERATURE

Patent Literature 1: Japanese Patent Laid-Open No.2017-117375

### SUMMARY

### TECHNICAL PROBLEM

The job matching system described in Patent Literature 1 provides employment information on the basis of position information for a job seeker; however, it is important for a business operator who will employ a job seeker whether or not the job seeker has experience with the business concerned. This is because it is possible the job seeker has experience with the concerned business to skip training necessary for the business, which makes it possible to employ the job seeker as an immediately useful worker. For example, when it is possible to temporarily employ a person who used to be employed by the business operator because of understaffed shift or other reasons, it is possible to utilize a person with experience. As described above, the conventional job matching system has not been configured to allow for use of information on people with experience who used to be employed by the business operator, and thus, it has been difficult to utilize people with experience.

The present disclosure thus describes a technique in which a person with experience who used to be employed by a business operator can be utilized.

### SOLUTION TO PROBLEM

An embodiment of the present disclosure provides an information processing device including a controller and a storage unit. The storage unit is configured to store an attribute of a job applicant who wishes to work for a business operator with an inside employee employed by the business operator distinguished from an outside person with experience who used to be employed by the business operator. The controller includes: a shift information reception unit that receives, from the job applicant, an entry of shift information on a preferred date and time to work for the business operator; a shift information presentation unit that presents the shift information to the business operator with the shift information from the inside employee distinguished from the shift information from the outside person with experience; and a selection unit that receives, from the business operator, an entry of selection information to select a job applicant to actually work based on the presented shift information.

An embodiment provides a method to be performed by an information processing device including a controller and a storage unit. The storage unit is configured to store an attribute of a job applicant who wishes to work for a business operator with an inside employee employed by the business operator distinguished from an outside person with experience who used to be employed by the business operator. The controller executes steps of: receiving, from the job applicant, an entry of shift information on a preferred date and time to work for the business operator; presenting the shift information to the business operator with the shift information from the inside employee distinguished from the shift information from the outside person with experience; and receiving, from the business operator, an entry of selection information to select a job applicant to actually work based on the presented shift information.

An embodiment provides a program executable by an information processing device including a controller and a storage unit. The storage unit is configured to store an attribute of a job applicant who wishes to work for a business operator with an inside employee employed by the business operator distinguished from an outside person with experience who used to be employed by the business operator. The program causes the controller to execute steps of: receiving, from the job applicant, an entry of shift information on a preferred date and time to work for the business operator; presenting the shift information to the business operator with the shift information from the inside employee distinguished from the shift information from the outside person with experience; and receiving, from the business operator, an entry of selection information to select a job applicant to actually work based on the presented shift information.

### ADVANTAGEOUS EFFECT OF INVENTION

According to the present disclosure, the information processing device is configured to store the attribute of the job applicant who wishes to work for a business operator with the inside employee employed by the business operator distinguished from the outside person with experience who used to be employed by the business operator. In addition, the entry of the shift information on the preferred date and time to work for the business operator is received from the job applicant. This shift information is presented to the business operator with the shift information from the inside employee distinguished from the shift information from the outside person with experience and is selected. Thus, the business operator can make the selection in consideration of the attribute of the job applicant. This makes it possible to utilize a person with experience who used to be employed by the business operator.

### BRIEF DESCRIPTION OF THE DRAWINGS

[Figure 1]FIG.1 is a diagram illustrating an overall configuration of a shift adjustment system 1 according to an embodiment 1.
[Figure 2]FIG.2 is a block diagram illustrating a functional configuration of a terminal device 10 included in the shift adjustment system 1 according to the embodiment 1.
[Figure 3]FIG.3 is a diagram illustrating a functional configuration of a server 20 included in the shift adjustment system 1 according to the embodiment 1.
[Figure 4]FIG.4 is a diagram illustrating data structures of a shift database 2021, an additional recruitment database 2022, an employee database 2023, and a form database 2024 that are stored in the server 20.
[Figure 5]FIG.5 is a flowchart illustrating an example processing flow of receiving an entry of shift information in the shift adjustment system 1 according to the embodiment 1.
[Figure 6]FIG.6 is a flowchart illustrating an example processing flow of adjusting shifts in the shift adjustment system 1 according to the embodiment 1.
[Figure 7]FIG.7 is a flowchart illustrating an example processing flow of performing additional recruitment for a shift in the shift adjustment system 1 according to the embodiment 1.
[Figure 8]FIG.8 is a flowchart illustrating another example processing flow of receiving a job application from an outside hire in response to the additional recruitment for the shift in the shift adjustment system 1 according to the embodiment 1.
[Figure 9]FIG.9 is a diagram illustrating an example screen of a terminal device 10A in the shift adjustment process.
[Figure 10]FIG.10 is a diagram illustrating an example screen of the terminal device 10A in the additional recruitment process for the shift.
[Figure 11]FIG.11 is a diagram illustrating an example screen of a terminal device 10B in the application reception process in response to the additional recruitment for the shift.
[Figure 12]FIG.12 is a diagram illustrating a functional configuration of the server 20 included in the shift adjustment system 1 according to an embodiment 2.

### DESCRIPTION OF EMBODIMENTS

Hereinafter, an embodiment of the present disclosure will be described with reference to drawings. In the following description, identical parts are marked with the same reference sign. Names and functions of such parts are also the same. Therefore, their detailed descriptions will not be repeated.

### <Overview>

Hereinafter, a shift adjustment system that provides a shift adjustment service according to an embodiment of the present disclosure will be described. The shift adjustment system is a system in which a preferred working hour, so-called preferred shift, of a temporary or part-timer at a retailer, etc. is received and adjusted by a business operator or a manager.

The shift adjustment system can be used by stores or companies in various industries, such as retailers, e.g., supermarkets and convenience stores, companies running a plurality of restaurants, and companies that lease workers for short-term temporary work; the following embodiment will be described with shift adjustment in a convenience store taken as an example. In this example of the embodiment, the business operator who uses this shift adjustment system is a store owner who manages a retailer or the like, or a company or sole proprietor that runs one or more stores. The shift adjustment system may be used by one or more business operators to share shift information; in the case of a plurality of business operators, the shift adjustment system may be used by group companies having a specific capital relationship to share the shift information or may be used by business operators having no particular capital relationship under a predetermined agreement to share the shift information.

In the shift adjustment system, as information on available employees, not only information on an employee (inside employee) who is employed by the business operator but also information on a former employee (former inside employee) who used to be employed on a full-time basis by the business operator but has already retired, so-called "OB" or "OG," or on a former employee (former outside hire) who used to be employed by the business operator to work for a short period of time (for example, for one day only) are registered and stored as an outside people with experience. In the following, the former inside employee and the former outside hire are collectively referred to as an outside person with experience. From such an inside employee or outside person with experience, information on preferred shift to work is received, and the shift is adjusted in order to allow for staff as required for each time slot. Examples of such an outside person with experience include those who used to be employed as temporaries by the business operator when they were students but retired as graduated or finding employment, and homemakers who used to be employed by the business operator as part-timers but retired for family reasons or re-employment.

In addition, in this shift adjustment system, when the shift cannot be adjusted (the number of job applicants fails to reach the number of workers originally required in a certain time slot), additional recruitment for the shift (non-adjustable shift) is presented to allow those available to apply for it in order to have any inside employee or any outside person with experience work for a short period of time. At that time, necessary documents for employment, such as a Notice of Employment and an attendance book, are issued. As described above, by having a person work at a store different from the store where the person originally works or by temporarily employing a person with work experience to work, it is possible to skip training necessary for the business, which makes it possible to employ the inside employee or the outside person with experience as an immediately useful worker. Further, in this shift adjustment system, when the shift cannot be adjusted even if additional recruitment is presented to the inside employee or the outside person with experience, a desired condition is presented to an outside job applicant having no employment experience (a person with no employment experience) under the business operator, allowing the outside job applicant to apply. Note that the information on such an outside job applicant may be registered and stored in the shift adjustment system as, for example, a job applicant who wishes to be continuously employed, more specifically, a job applicant who cannot work on a predetermined day or in a predetermined time slot but wishes to be continuously employed as a part-time worker. This allows for stepwise presentation of recruitment information for additional shift such that the additional recruitment is presented first to inside employees when the shift cannot be adjusted, then to the outside person with experience when the shift still cannot be adjusted, and finally to the outside job applicant when the shift still cannot be adjusted.

In other words, this shift adjustment system is a system for making it possible to utilize a person with experience by performing shift adjustment with information on a person with work experience who used to be employed by the business operator stored and having the person work again when he or she desires or when the shift cannot be adjusted.

### <First Embodiment>

Hereinafter, a shift adjustment system 1 for a convenience store will be described. In the following description, for example, when a terminal device 10 accesses a server 20, the server 20 responds with information for generating a screen in the terminal device 10. The terminal device 10 generates and displays a screen based on the information received from the server 20.

### <1. Overall Configuration of Shift Adjustment System 1>

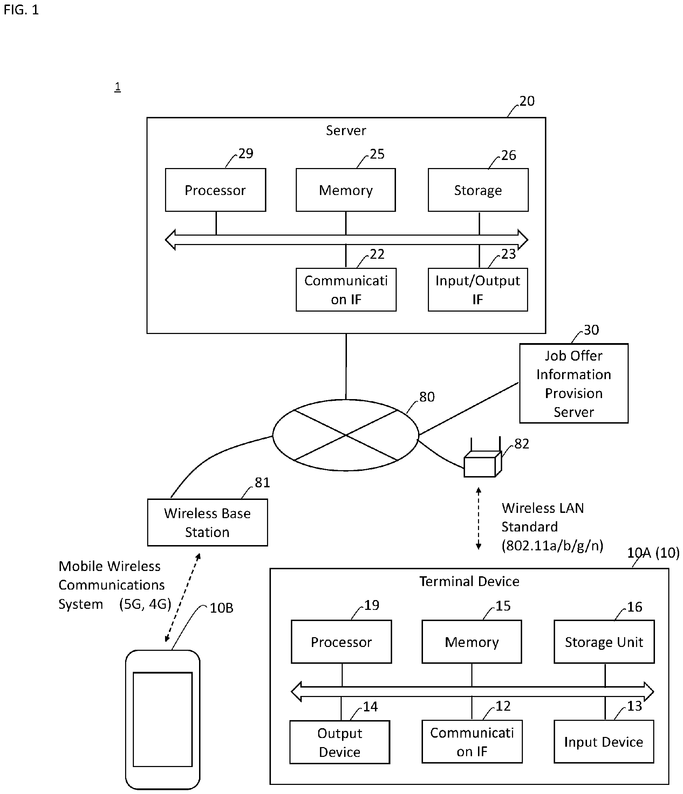

FIG.1 is a diagram illustrating an overall configuration of the shift adjustment system 1. As shown in FIG.1, the shift adjustment system 1 includes a plurality of terminal devices (shown as terminal devices 10A and 10B in FIG.1, which may be hereinafter collectively referred to as "terminal device 10"), the server 20, and a job offer information provision server 30. The terminal device 10, the server 20, and the job offer information provision server 30 are communicatively connected to each other via a network 80. The network 80 includes a wired or wireless network.

The terminal device 10 is a device operated by each user. Here, the user includes a business operator or a manager of a retailer or the like, an employee employed by the business operator, or a former employee registered in the shift adjustment system 1. The terminal device 10 is realized by a mobile terminal such as a smartphone or a tablet compatible with a mobile communication system. In addition, the terminal device 10 may be, for example, a desktop personal computer (PC) or a laptop PC. As shown as the terminal device 10A in FIG.1, the terminal device 10 includes a communication interface (IF) 12, an input device 13, an output device 14, a memory 15, a storage unit 16, and a processor 19.

The terminal device 10 is communicatively connected to the server 20 via the network 80. The terminal device 10 communicates with communications equipment such as a wireless base station 81 that is compliant with communication standards such as 5G and Long-Term Evolution (LTE) and a wireless LAN router 82 that is compliant with wireless local area network (LAN) standards such as Institute of Electrical and Electronics Engineers (IEEE) 802.11, thereby being connected to the network 80.

The communication IF 12 is an interface for inputting or outputting a signal for the terminal device 10 to communicate with an external device. The input device 13 is an input device for receiving an entry operation (e.g., a pointing device such as a touch panel, a touchpad, and a mouse, a keyboard, etc.) from a user. The output device 14 is an output device (e.g., a display or a speaker) for presenting information to a user. The memory 15 is a memory for temporarily storing a program and data to be processed by the program or the like and is, for example, a volatile memory such as a dynamic random access memory (DRAM). The storage unit 16 is a storage device for storing data, such as a flash memory or a hard disc drive (HDD). The processor 19 is hardware for executing an instruction set described in a program and includes an arithmetic logic unit, a register, and a peripheral circuit.

The server 20 is a device that manages information on an inside employee or an outside person with experience, preferred shift information from the inside employee or the outside person with experience, and additional recruitment information when a shift cannot be adjusted. The server 20 receives an entry of shift information from the inside employee or the outside person with experience, presents the shift information to the business operator, notifies a worker of selection in response to receipt of an operation of selecting the worker to actually work based on the shift information, and issues a necessary form. In addition, the server 20 presents additional recruitment to the inside employee or the outside person with experience when the shift cannot be adjusted and receives a job application.

The server 20 is a computer connected to the network 80. The server 20 includes a communication IF 22, an input/output IF 23, a memory 25, a storage 26, and a processor 29.

The communication IF 22 is an interface for inputting or outputting a signal for the server 20 to communicate with an external device. The input/output IF 23 functions as an interface with an input device for receiving an entry operation from a user and an output device for presenting information to a user. The memory 25 is a memory for temporarily storing a program and data to be processed by the program or the like and is, for example, a volatile memory such as a dynamic random access memory (DRAM). The storage 26 is a storage device for storing data, such as a flash memory or a hard disc drive (HDD). The processor 29 is hardware for executing an instruction set described in a program and includes an arithmetic logic unit, a register, and a peripheral circuit.

The job offer information provision server 30 is a device used by an outside job offer information provider and is a device which manages job offer information provided by various business operators to present it on a web page and which receives an application from a job applicant to notify the various business operators. The shift adjustment system 1 is used in receiving an application from an outside job applicant.

### <1.1. Configuration of Terminal Device 10>

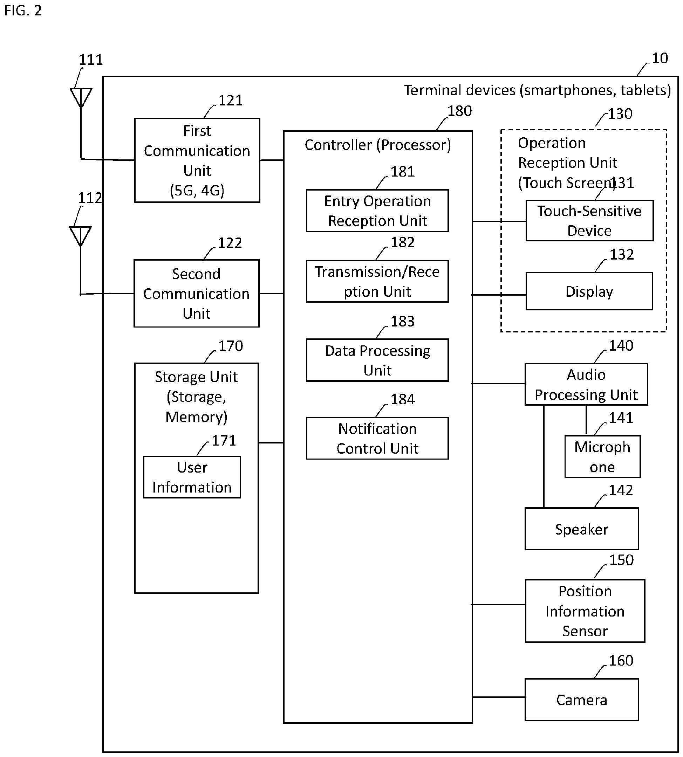

FIG.2 is a block diagram of the terminal device 10 included in the shift adjustment system 1 according to the embodiment 1. As shown in FIG.2, the terminal device 10 includes a plurality of antennas (an antenna 111 and an antenna 112), a wireless communication unit corresponding to each of the antennas (a first wireless communication unit 121 and a second wireless communication unit 122), an operation reception unit 130 (including a touch-sensitive device 131 and a display 132), an audio processing unit 140, a microphone 141, a speaker 142, a position information sensor 150, a camera 160, a storage unit 170, and a controller 180. The terminal device 10 also has a function and a configuration not particularly shown in FIG.2 (e.g., a battery for holding electric power, a power supply circuit for controlling the power supply from the battery to each circuit). As shown in FIG.2, each block included in the terminal device 10 is electrically connected by a bus or the like.

The antenna 111 radiates a signal given by the terminal device 10 as a radio wave. The antenna 111 receives a radio wave from space to provide a received signal for the first wireless communication unit 121.

The antenna 112 radiates a signal given by the terminal device 10 as a radio wave. The antenna 112 receives a radio wave from space to provide a received signal for the second wireless communication unit 122.

The first wireless communication unit 121 performs modulation and demodulation for transmitting or receiving a signal via the antenna 111 in order for the terminal device 10 to communicate with another wireless device. The second wireless communication unit 122 performs modulation and demodulation for transmitting or receiving a signal via the antenna 112 in order for the terminal device 10 to communicate with another wireless device. The first wireless communication unit 121 and the second wireless communication unit 122 are a communication module including a tuner, a received signal strength indicator (RSSI) calculation circuit, a cyclic redundancy check (CRC) calculation circuit, a high frequency circuit, or the like. The first wireless communication unit 121 and the second wireless communication unit 122 perform modulation and demodulation or frequency conversion on a radio signal transmitted or received by the terminal device 10 and provide a received signal for the controller 180.

The operation reception unit 130 has a mechanism for receiving a user's entry operation. Specifically, the operation reception unit 130 is configured as a touch screen and includes the touch-sensitive device 131 and the display 132.

The touch-sensitive device 131 receives an entry operation of a user of the terminal device 10. The touch-sensitive device 131 uses, for example, a capacitive touch panel, thereby detecting a contact position of the user on the touch panel. The touch-sensitive device 131 outputs a signal indicating the contact position of the user detected by the touch panel to the controller 180 as the entry operation.

The display 132 has data such as an image, a moving image, or text appear in response to the control by the controller 180. The display 132 is realized by, for example, a liquid crystal display (LCD) or an organic electroluminescence (EL) display.

The audio processing unit 140 modulates or demodulates an audio signal. The audio processing unit 140 modulates a signal supplied from the microphone 141 and provides the modulated signal for the controller 180. The audio processing unit 140 also provides the audio signal for the speaker 142. The audio processing unit 140 is realized by, for example, a processor for audio processing. The microphone 141 receives an audio input and provides an audio signal corresponding to the audio input for the audio processing unit 140. The speaker 142 converts the audio signal supplied from the audio processing unit 140 into audio and outputs the audio toward the outside of the terminal device 10.

The position information sensor 150 is a sensor that detects a position of the terminal device 10, and is, for example, a Global Positioning System (GPS) module. The GPS module is a receiver used in a satellite positioning system. The satellite positioning system receives signals from at least three or four satellites and detects a current position of the terminal device 10 on which the GPS module is mounted based on the received signals.

The camera 160 is a device for receiving light with a light-receiving element to output the light as a captured image. The camera 160 is, for example, a depth camera capable of detecting a distance from the camera 160 to an object to be captured.

The storage unit 170 includes, for example, a flash memory or the like and stores data and a program to be used by the terminal device 10. In one aspect, the storage unit 170 stores user information 171.

The user information 171 is information on a user such as a job applicant who enters shift information using the terminal device 10 or a business operator who manages a shift status. The user information includes information for identifying an employee and a former employee (including both an inside employee and an outside person with experience) (employee ID), an employee's name, a business operator's ID, a business operator's name, or the like.

The controller 180 reads a program stored in the storage unit 170 to execute instructions included in the program, thereby controlling an operation of the terminal device 10. The controller 180 is, for example, an application pre-installed on the terminal device 10. The controller 180 operates according to the program, thereby exhibiting functions as an entry operation reception unit 181, a transmission/reception unit 182, a data processing unit 183, and a notification control unit 184.

The entry operation reception unit 181 receives a user's entry operation on an input device such as the touch-sensitive device 131. The entry operation reception unit 181 determines the type of user's operation such as a flick operation, a tap operation, or a drag (swipe) operation on the basis of information on coordinates on the touch-sensitive device 131 at which the user puts his or her finger or the like.

The transmission/reception unit 182 performs processing for the terminal device 10 to communicate with an external device such as the server 20 according to a communication protocol.

In accordance with the program, the data processing unit 183 performs an arithmetic operation on the data of which entry is received by the terminal device 10 and performs processing of outputting a result of the arithmetic operation to a memory or the like.

The notification control unit 184 performs processing of presenting information to the user. The notification control unit 184 performs processing of causing the display 132 to display a display image, processing of causing the speaker 142 to output a sound, processing of causing the camera 160 to generate a vibration, or the like.

### <1.2. Functional Configuration of Server 20>

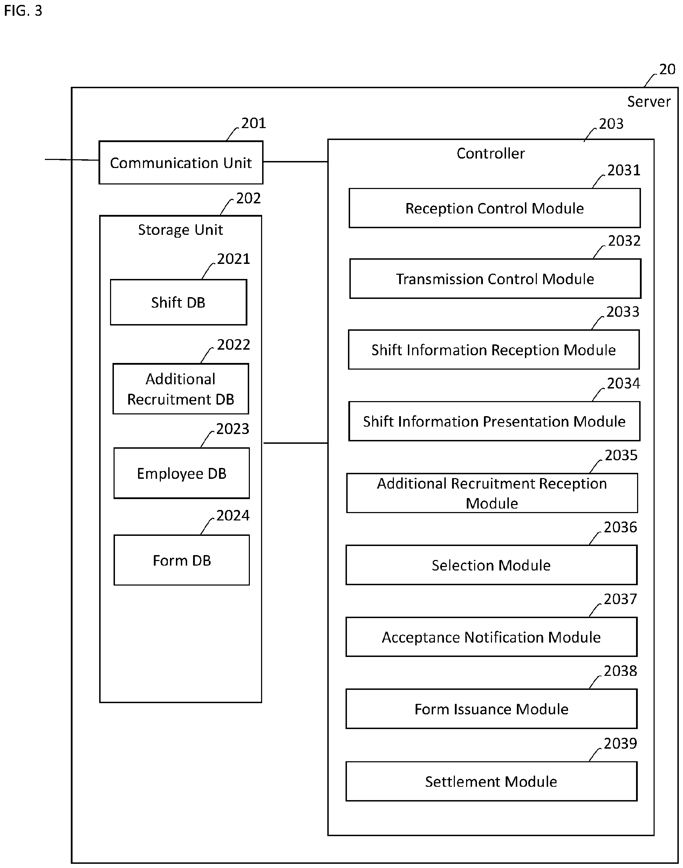

FIG.3 is a diagram illustrating a functional configuration of the server 20 included in the shift adjustment system 1 according to the embodiment 1. As shown in FIG.3, the server 20 exhibits functions as a communication unit 201, a storage unit 202, and a controller 203.

The communication unit 201 performs processing for the server 20 to communicate with an external device.

The storage unit 202 stores data and a program to be used by the server 20. The storage unit 202 stores a shift database 2021, an additional recruitment database 2022, an employee database 2023, a form database 2024, or the like.

The shift database 2021 is a database for holding information on a preferred shift to work that is obtained from the inside employee or the outside person with experience to the business operator who uses the shift adjustment system 1. Details will be described later.

The additional recruitment database 2022 is a database for holding additional recruitment information for a shift that the business operator using the shift adjustment system 1 offers when the shift cannot be adjusted. Details will be described later.

The employee database 2023 is a database for holding information on the inside employee and the outside person with experience (which may include an outside job applicant or person with no employment experience) in the business operator using the shift adjustment system 1. Details will be described later.

The form database 2024 is a database for holding information on a form to be issued by the shift adjustment system 1. Details will be described later.

When the processor of the server 20 performs processing in accordance with the program, the controller 203 exhibits functions shown as various modules accordingly. The various modules include a reception control module 2031, a transmission control module 2032, a shift information reception module (shift information reception unit) 2033, a shift information presentation module (shift information presentation unit) 2034, an additional recruitment reception module (additional recruitment reception unit) 2035, a selection module (selection unit) 2036, an acceptance notification module (acceptance notification unit) 2037, a form issuance module (form issuance unit) 2038, and a settlement module (settlement unit) 2039.

The reception control module 2031 controls processing in which the server 20 receives a signal from an external device according to a communication protocol.

The transmission control module 2032 controls processing in which the server 20 transmits a signal to an external device according to a communication protocol.

The shift information reception module 2033 controls processing of receiving shift information from the terminal device 10 in response the inside employee employed by the business operator or the outside person with experience operating the terminal device 10 to enter the information on a preferred shift to work. The shift information reception module 2033 receives information such as identification information (e.g., an employee ID) for identifying the inside employee or the outside person with experience, a start-work date and time and an end-work date and time at a store or the like of the business operator, a store name if there are multiple stores, and a job type or operation name if there are multiple job types or operations related to the work. The shift information received by the shift information reception module 2033 is entered and transmitted by the inside employee, the outside person with experience, or the outside job applicant (which may include a person with no employment experience) registered in the shift adjustment system 1 at his or her own convenience.

Further, the shift information reception module 2033 controls processing of receiving, from the terminal device 10, information on an application (job application information) from the inside employee, the outside person with experience, and the outside job applicant (collectively referred to as "job applicant(s)") for an additional recruitment for a shift that the business operator offers when the shift cannot be adjusted as described later. The shift information reception module 2033 may receive the application from the job offer information provision server 30 when the job applicant is the outside job applicant. When the job applicant is the outside job applicant, the shift information reception module 2033 receives personal data such as a name, address, contact information, gender, or age of the job applicant, information to associate with registration in the job offer information provision server 30, and a preferred working hour.

For example, the shift information reception module 2033 first receives the shift information only from the inside employee. Thereafter, when the shift cannot be adjusted only with the shift information from the inside employee, the business operator offers additional recruitment for the shift to the outside person with experience, and the shift information reception module 2033 receives the shift information from the outside person with experience. When the shift cannot be adjusted only with the shift information from the inside employee and the outside person with experience, the business operator further offers additional recruitment for the shift to the outside job applicant (which may include a person with no employment experience), and the shift information reception module 2033 receives the shift information from the outside person with experience. The shift information reception module 2033 may receive the shift information stepwise by attribute of the job applicant in the above manner or may receive the shift information equally from job applicants with multiple attributes.

When an application from the job applicant is made in response to the additional recruitment for the shift from the business operator, the shift information reception module 2033 may allow the job applicant to specify a preferred working hour different from the presented recruit information. For example, if information on a condition for the additional recruitment that is entered by the business operator indicates a working hour of 9:00 to 18:00, the job applicant will typically apply for the job only when he or she is available to work in the entire of this time slot but may apply for the job with a shorter time than this time slot, for example, 9:00 to 15:00, entered as the preferred working hour.

The shift information presentation module 2034 controls processing of presenting the shift information received by the shift information reception module 2033 to the business operator with the shift information distinguished by inside employee, outside person with experience, and outside job applicant (for example, by changing colors). The shift information presentation module 2034 presents information for identifying the job applicant wishing to work (or a name or the like) or information such as a unit price of salary for a given hour (e.g., hourly wage) for each job applicant and the entered preferred working hour so as to assist the business operator in selecting a person to actually work from among job applicants; for example, the presentation is made such that pieces of the job application information will be displayed in parallel and can be compared. Note that the shift information presented by the shift information presentation module 2034 also includes shift information entered in response to the additional recruitment offered when the shift cannot be adjusted as described later.

The additional recruitment reception module 2035 controls processing of receiving information on additional recruitment from the terminal device 10, the additional recruitment which the business operator enters by operating the terminal device 10 for information on the shift that cannot be adjusted. The additional recruitment reception module 2035 receives, for example, a company name and a store name of the business operator, a job type name or an operation name related to the work, the number of persons recruited, a preferred work day and time, a unit price of salary in a predetermined time, and information on scope of presentation of the additional recruitment information, and controls the presentation to fall within the scope accordingly. The scope of presentation of the additional recruitment information is information indicating whether the additional recruitment information is to be presented to the inside employee only, to the inside employee and the outside person with experience, or to the inside employee, the outside person with experience, and the outside job applicant.

In addition, the additional recruitment reception module 2035 controls processing of presenting the information on the additional recruitment received from the business operator to the inside employee, the outside person with experience, and the outside job applicant. The additional recruitment reception module 2035 receives the information on the scope of presentation of the additional recruitment information, and controls the presentation of the additional recruitment information to fall within the scope. The control of the scope of presentation of the additional recruitment information by the additional recruitment reception module 2035 may be performed by stepwise presentation, for example, presentation to the inside employee only, to the inside employee and the outside person with experience only, and to the inside employee, the outside person with experience, and the outside job applicant, or by presentation to the inside employee, the outside person with experience, and the outside job applicant from the beginning. Specifically, for example, the additional recruitment information that is intended for presentation only to the inside employee will be provided on a web page that can be viewed only when the inside employee is authenticated by an authentication method; the additional recruitment information intended for presentation only to the inside employee and the outside person with experience will be provided on a web page that can be viewed only when the inside employee is authenticated by an authentication method; the additional recruitment information that is intended for presentation to the inside employee, the outside person with experience, and the outside job applicant will be provided on an open web page that can be viewed by anyone. Further, the scope of presentation of the additional recruitment information may be controlled not only based on the attribute of the job applicant but also based on a condition such as a geographical range based on, for example, a place of residence of the job applicant, the gender and age of the job applicant, or an hourly wage. In addition, the information on the scope of presentation of the additional recruitment information can be changed later.

Further, the additional recruitment reception module 2035 may present the additional recruitment information received from a store run by one business operator to the inside employee of another store or the outside person with experience or to the outside job applicant managed by an outside job offer information provider (an operator of the job offer information provision server 30). In addition, the additional recruitment reception module 2035 may present the information on the additional recruitment received from one business operator to an inside employee employed by another business operator or an outside person with experience who used to be employed by another business operator. The other business operator is, for example, another business operator from a plurality of business operators who use the shift adjustment system 1 and may be another business operator from an affiliated group having a specific capital relationship or may be another business operator from business operators having no specific capital relationship.

The selection module 2036 controls processing of receiving, from the terminal device 10, a selection result, i.e., information on the job applicant to work that is entered through operating the terminal device 10 by the business operator selecting the job applicant to actually work with reference to the job application information presented by the shift information presentation module 2034. The selection module 2036 may allow the selection with a time adjusted with respect to the preferred working hour specified by the job applicant. For example, when the preferred working hour specified by the job applicant is 9:00 to 15:00, the business operator who would be able to accept the job applicant with the working hour of 9:00 to 14:00 may enter the working hour changed to 9:00 to 14:00 to select the job applicant. The selection module 2036 receives information on the selected job applicant and information on the adjusted working hour. Note that the selection module 2036 may automatically select the job applicant to actually work when the job application information matches up with a predetermined condition set by the business operator.

The acceptance notification module 2037 controls processing of notifying the terminal device 10 of the job applicant pertaining to the selected job application information received by the selection module 2036 that the applicant has been selected by the business operator. The acceptance notification module 2037 displays information indicative of the selection by the business operator as a pop-up screen on the terminal device 10, for example.

The form issuance module 2038 controls processing of issuing a document required for employment, such as a Notice of Employment or an attendance book, for the job applicant pertaining to the selected job application information. Since the types of documents required for employment are different depending on whether the job applicant to actually work is the inside employee, the outside person with experience, or the outside job applicant, the form issuance module 2038 issues a document required for employment according to the job applicant.

The settlement module 2039 controls processing of acquiring attendance information for the job applicant (employed) who has actually worked to calculate a salary amount based on a predetermined unit price of salary and generating remittance data for transferring money from a deposit account of the business operator to a deposit account of the job applicant. When the job applicant (employed) is the outside job applicant, information on this person is stored in the employee database 2023. That is, the employee database 2023 is configured to store information on any person employed by the business operator (whether in the long term or in the short term) as an outside person with experience.

### <2. Data Structure>

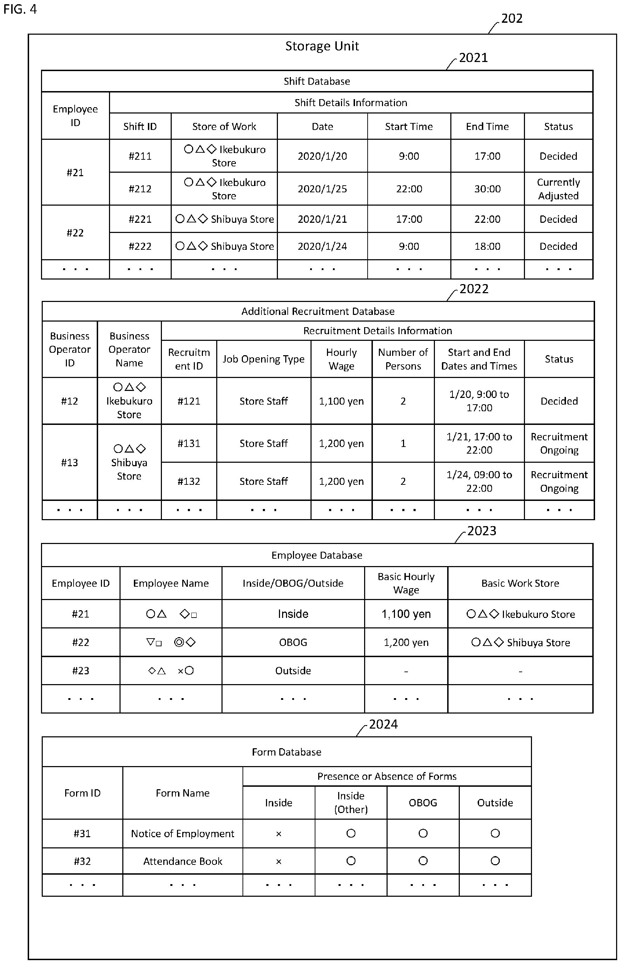

FIG.4 is a diagram illustrating data structures of a shift database 2021, an additional recruitment database 2022, an employee database 2023, and a form database 2024 stored in the server 20.

As shown in FIG.4, each record of the shift database 2021 includes an item "employee ID", an item "shift details information", or the like.

The item "employee ID" is information for identifying an inside employee or an outside person with experience.

The item "shift details information" is information on details of the shift information entered by the inside employee or the outside person with experience and specifically includes an item "shift ID", an item "work store name", an item "date", an item "start time", an item "end time", an item "status", or the like. Note that the shift details information includes information before adjustment, information before work after adjustment, and information after completion of the work.

The item "shift ID" is information for identifying the shift information entered by the inside employee or the outside person with experience. Note that in the example shown in FIG.4, the shift information can be identified by date but may be made identifiable by unit of entry or by month.

The item "work store name" is information indicating the name of a store of work in the shift. This item is set because the inside employee or the outside person with experience may work at a store other than the store where they normally work for example when the business operator runs a plurality of stores.

The item "date" is information indicating the date of work in the shift.

The item "start time" is information indicating the time when the work starts in the shift.

The item "end time" is information indicating the time when the work ends in the shift.

The item "status" is information indicating a status pertaining to the shift information and stores the status "Currently Adjusted" indicating pre-adjustment, the status "Decided" indicating a before-work state with adjustment made, the status "Finished" indicating that the work has actually finished, or the like.

Upon receipt of the shift information from the inside employee or the outside person with experience, the shift information reception module 2033 stores it in the shift database 2021. The selection module 2036 updates the shift database 2021 in response to the receipt of the selection information for the job applicant to actually work from the business operator.

Each record of the additional recruitment database 2022 includes an item "business operator ID", an item "business operator name", an item "recruitment details information", or the like.

The item "business operator ID" is information for identifying each business operator, such as a retailer, who has entered the additional recruitment information for the shift information.

The item "business operator name" is information including a name of the business operator, a company name, a store name, as well as a department name depending on entry data of the business operator.

The item "recruitment details information" is information on details of the additional recruitment information for the shift information entered by the business operator and specifically includes an item "recruitment ID", an item "job opening type", an item "hourly wage", an item "number of persons", an item "start and end dates and times", an item "status", or the like. Note that the additional recruitment information for the shift information includes information on ongoing recruitment, information after closing of applications, and information after completion of the work.

The item "recruitment ID" is information for identifying the additional recruitment information for the shift information entered by the business operator. Note that one business operator may enter a plurality of items of the additional recruitment information for the shift information and thus the additional recruitment information for the shift information is made identifiable by business operator.

The item "job opening type" is information indicating a job type pertaining to the additional recruitment information for the shift information. Specifically, the "job type" indicates an operation to actually work on in the shift; in the example shown in FIG.4, the job type "store staff", which is involved in an operation such as customer service in a convenience store, is stored.

The item "hourly wage (outside)" is information indicating a unit price of salary in a predetermined time pertaining to the additional recruitment information for the shift information, and an hourly wage is shown as an example thereof. This information on an hourly wage is, for example, information applied to the outside job applicant; for the inside employee and the outside person with experience, an item "basic hourly wage" in the employee database 2023, which will be described later, is applied, but the hourly wage of the above item may be applied.

The item "number of persons" is information indicating the number of persons recruited pertaining to the additional recruitment information for the shift information.

The item "start and end dates and times" is information indicating a date of work, a work start time, a work end time pertaining to the additional recruitment information for the shift information.

The item "status" is information indicating a status pertaining to the additional recruitment information for the shift information, and "recruitment ongoing" indicating recruitment ongoing, "selection ongoing" indicating that job applicants are under selection after closing of applications, "decided" indicating that a job applicant to actually work has been decided, or the like is stored therein.

Upon receipt of the additional recruitment information for the shift information from the business operator, the additional recruitment reception module 2035 stores it in the additional recruitment database 2022. The selection module 2036 updates the additional recruitment database 2022 upon receipt of the selection information for the job applicant to actually work for the business operator.

Each record of the employee database 2023 includes an item "employee ID", an item "employee name", an item "inside/OBOG/outside", an item "basic hourly wage", and an item "basic work store", or the like.

The item "employee ID" is information for identifying the inside employee or the outside person with experience and corresponds to the item "employee ID" in the shift database 2021. Note that the employee database 2023 may store information on an outside job applicant who wishes to work for the business operator or information on a job applicant who has not worked for the business operator; in this case, information for identifying the outside job applicant is stored.

The item "employee name" is information indicating a name of the inside employee or the outside person with experience.

The item "inside/OBOG/outside" is information on an attribute indicating whether the job applicant is the inside employee, the former inside employee, or the former outside hire. For example, as shown in FIG.4, "inside" indicating the inside employee, "OBOG" indicating the former inside employee, or "outside" indicating the former outside hire is stored.

The item "basic hourly wage" is information indicating a unit price of salary (hourly wage) in a predetermined time for the inside employee or the outside person with experience.

The item "basic work store" is information indicating a store or the like where the inside employee or the outside person with experience usually works or used to work.

When the attribute is an inside employee, the information stored in the item "basic hourly wage" and the item "basic work store" is information on a store where the inside employee usually works and information on an hourly wage for that store; when the attribute is an outside person with experience, the stored information is information on a store where the outside person with experience used to work and information on an hourly wage at that store. As described below, when the outside person with experience is a former outside hire, no information may be stored in the item "basic hourly wage" and the item "basic work store". In addition, when the inside employee or the outside person with experience works in the store stored in the item "basic work store", the item "basic hourly wage" may be applied, and when the inside employee or the outside person with experience works in another store, the item "hourly wage" in the additional recruitment database 2022 may be applied.

When the job applicant (employed) is an outside job applicant, the settlement module 2039 stores information on this job applicant in the employee database 2023 after the work. In addition, the server 20 updates the employee database 2023 when the attribute is changed, such as when the inside employee is retired or when the outside person with experience is employed again.

Each record of the form database 2024 includes an item "form ID", an item "form name", an item "presence or absence of forms", or the like.

The item "form ID" is information for identifying the type of a form.

The item "form name" is information indicating a name of a form.

The item "presence or absence of forms" is information indicating whether a form needs to be issued when the job applicant actually works. For example, as shown in FIG.4, for each of an inside employee, an inside employee employed by another business operator, an outside person with experience, and an outside job applicant, "o" indicating that a form needs to be issued or "×" indicating that no form needs to be issued is stored.

### <3. Operation>

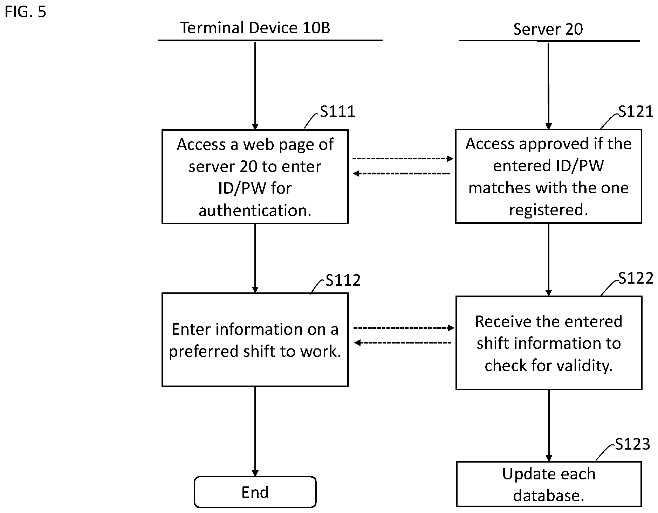

Hereinafter, with reference to FIGS.5 to 8, processing of receiving an entry of shift information, adjusting a shift, and performing additional recruitment for the shift in the shift adjustment system 1 according to the embodiment 1 will be described. In the following description, it is assumed that the terminal device 10A shown in FIG.1 is a PC that the business operator or manager uses, and the terminal device 10B is a mobile terminal that the inside employee, the outside person with experience, and the outside job applicant use.

FIG.5 is a flowchart illustrating an example processing flow of receiving an entry of shift information in the shift adjustment system 1 according to the embodiment 1.

In step S111, an entry operation reception unit 181 of the terminal device 10B receives an operation of entering an ID and a password from a job applicant (inside employee and outside person with experience) in order to perform authentication required for access to the service of the shift adjustment system 1. For example, the job applicant refers to a web page provided by the server 20 and enters an employee ID and a set password. The transmission/reception unit 182 transmits the employee ID, the set password, and a request for transition to the next screen to the server 20.

In step S121, the communication unit 201 of the server 20 receives the employee ID, the password, and the request transmitted from the terminal device 10B. The server 20 checks the employee ID and the password for validity. When the employee ID and the password are valid, the shift information reception module 2033 of the server 20 responds to the terminal device 10B with screen information on a shift information list via the communication unit 201 so that a shift information entry screen for the job applicant to enter the shift information will be presented (displayed) in response to a request from the terminal device 10B.

In step S112, the transmission/reception unit 182 of the terminal device 10B receives the screen information transmitted from the server 20. The notification control unit 184 causes the display 132 to display the received shift information entry screen. The entry operation reception unit 181 receives, from the job applicant, an operation of entering information on his/her preferred shift to work through the shift information entry screen. The transmission/reception unit 182 transmits the entered job application information to the server 20.

In step S122, the shift information reception module 2033 of the server 20 receives, via the communication unit 201, the entered shift information transmitted from the terminal device 10B. The shift information reception module 2033 checks the entry data for correctness (such as validity of date) and for shift information with the same date or the same time slot.

In step S123, the shift information reception module 2033 of the server 20 stores the received shift information in the shift database 2021, thereby registering the job application information.

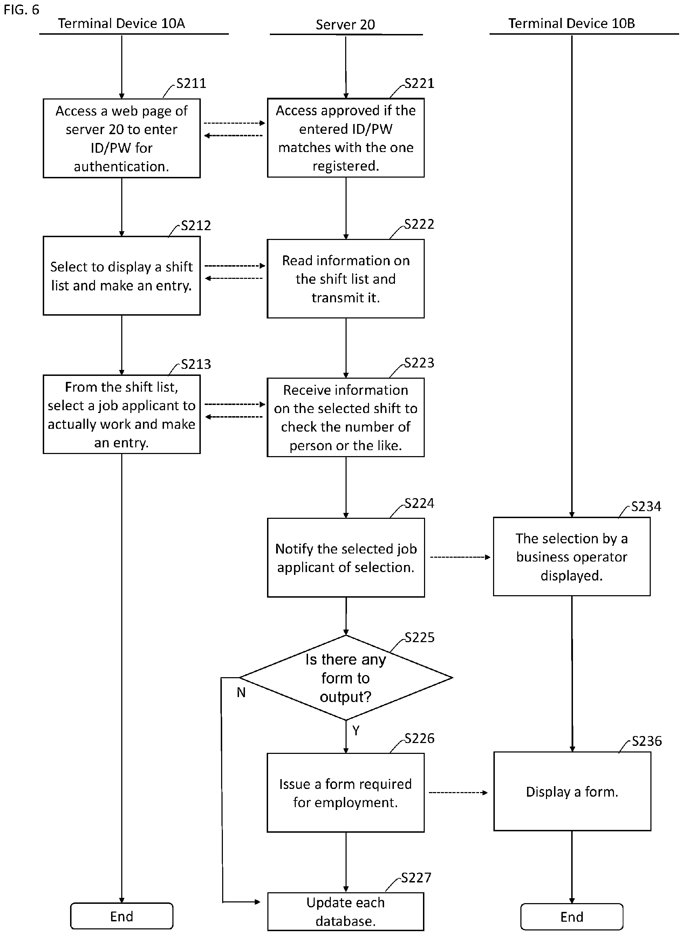

FIG.6 is a flowchart illustrating another example processing flow of adjusting shifts in the shift adjustment system 1 according to the embodiment 1.

In step S211, the entry operation reception unit 181 of the terminal device 10A receives an operation of entering an ID and a password from the business operator in order to perform authentication required for access to the service of the shift adjustment system 1. For example, the business operator refers to a web page provided by the server 20 and enters a business operator ID and a set password. The transmission/reception unit 182 transmits the business operator ID, the set password, and a request for transition to the next screen to the server 20.

In step S221, the communication unit 201 of the server 20 receives the business operator ID, the password, and the request transmitted from the terminal device 10A. The server 20 checks the business operator ID and the password for validity; when the business operator ID and the password are valid, the shift information presentation module 2034 of the server 20 responds to the terminal device 10A with screen information via the communication unit 201 so that an entry screen for the business operator to make an entry to specify scope of display of the shift information (date and time, a specific job applicant, etc.) will be presented (displayed) in response to a request from the terminal device 10A.

In step S212, the transmission/reception unit 182 of the terminal device 10A receives the screen information transmitted from the server 20. The notification control unit 184 causes the display 132 to display the received entry screen. The entry operation reception unit 181 receives a request to present the shift information from the business operator through the screen to enter the scope in which the shift information is displayed. The transmission/reception unit 182 transmits, to the server 20, information on the request to present the entered shift information.

In step S222, the shift information presentation module 2034 of the server 20 receives, via the communication unit 201, the request to present the shift information transmitted from the terminal device 10A. The shift information presentation module 2034 checks the entry data for correctness (such as validity of date). In response to the request from the terminal device 10A, the shift information presentation module 2034 refers to the shift database 2021, thereby responding to the terminal device 10A with the information on the shift information list via the communication unit 201 in order to present the shift information.

In step S213, the transmission/reception unit 182 of the terminal device 10A receives the information on the shift information list transmitted from the server 20. The notification control unit 184 causes the display 132 to display the received information on the shift information list. At this time, based on instructions from the shift information presentation module 2034, the display 132 is caused to display information (or a name or the like) for identifying the job applicant wishing to work or information such as a unit price of salary for a given hour or the entered preferred working hour such that the displayed information is distinguished by inside employee, outside person with experience, and outside job applicant. The entry operation reception unit 181 receives, from the business operator, an operation of entering the result of selecting a job applicant to actually work. The transmission/reception unit 182 transmits the information on the job applicant to work to the server 20.

In step S223, the selection module 2036 of the server 20 receives, via the communication unit 201, the selection result of the job applicant to actually work transmitted from the terminal device 10A. The selection module 2036 checks the entry data for correctness (as to whether the number of people selected does not exceed the number of people recruited in the same time slot).

In step S224, in order to notify the selected job applicant that the job applicant has been selected by the business operator, the acceptance notification module 2037 of the server 20 transmits information indicating that the job applicant has been selected by the business operator to the terminal device 10B via the communication unit 201.

In step S234, the transmission/reception unit 182 of the terminal device 10B receives, from the server 20, the transmitted information indicating that the job applicant has been selected by the business operator. The notification control unit 184 causes the display 132 to display the information indicating that the job applicant has been selected by the business operator as a pop-up screen, for example.

In step S225, the form issuance module 2038 of the server 20 refers to the employee database 2023 to determine whether the selected job applicant is an inside employee, an outside person with experience, or an outside job applicant, and then refers to the form database 2024 to determine whether a predetermined document needs to be issued for employment. When a document needs to be issued ("Y" in step S424), the process proceeds to step S226, and when no document needs to be issued ("N" in step S424), the process proceeds to step S227.

In step S226, the form issuance module 2038 of the server 20 issues a document required for employment, such as a Notice of Employment or an attendance book, for the selected job applicant. The form issuance module 2038 issues the required document as an electronic form. The form issuance module 2038 transmits the issued electronic form to the terminal device 10B of the selected job applicant via the communication unit 201.

In step S236, the transmission/reception unit 182 of the terminal device 10B receives the issued electronic form transmitted from the sever 20.

In step S227, the settlement module 2039 of the server 20 acquires attendance information for the job applicant (employed) who has actually worked to perform processing of settling a salary or the like. When the job applicant (employed) is an outside job applicant, the settlement module 2039 stores information on this person in the employee database 2023, thereby registering the employed person.

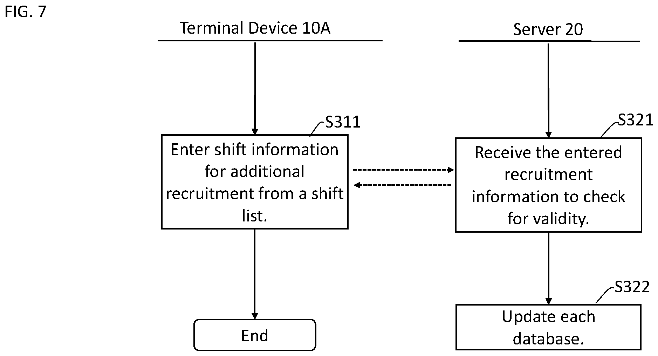

FIG.7 is a flowchart illustrating an example processing flow of performing additional recruitment for a shift in the shift adjustment system 1 according to the embodiment 1.

In step S311, the entry operation reception unit 181 of the terminal device 10A receives, from the business operator, an operation of entering additional recruitment for the shift information due to failure to adjust the shift. The transmission/reception unit 182 transmits the additional recruitment for the shift information for work to the server 20.

In step S321, the additional recruitment reception module 2035 of the server 20 receives, via the communication unit 201, the additional recruitment information for the shift information transmitted from the terminal device 10A. The additional recruitment reception module 2035 checks the entry data for correctness (such as validity of date).

In step S322, the additional recruitment reception module 2035 of the server 20 stores the received additional recruitment information for the shift information in the additional recruitment database 2022, thereby registering the additional recruitment information for the shift information.

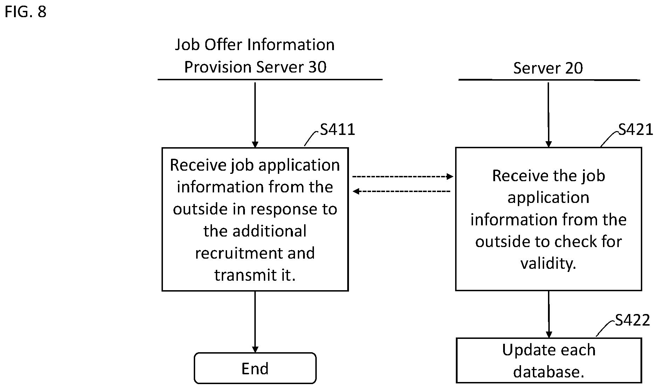

FIG.8 is a flowchart illustrating another example processing flow of receiving a job application from an outside hire in response to the additional recruitment for the shift in the shift adjustment system 1 according to the embodiment 1. This example assumes that an outside job applicant accesses the job offer information provision server 30 and transmits job application information in response to the additional recruitment for the shift managed on the server 20.

In step S411, the job offer information provision server 30 receives an operation of entering job application information from the job applicant. The job offer information provision server 30 transmits the entered job application information to the server 20.

In step S421, the shift information reception module 2033 of the server 20 receives, via the communication unit 201, the entered job application information transmitted from the job offer information provision server 30. The shift information reception module 2033 checks the entry data for correctness (such as validity of the date) or whether the same job application information has not yet been registered.

In step S422, the shift information reception module 2033 of the server 20 stores the received job application information in the shift database 2021, thereby registering the job application information.

As described above, in the shift adjustment system 1, not only information on the inside employee employed by the business operator but also information on the outside person with experience who used to be employed by the business operator are registered and stored as information on available employees. In addition, the entry of the shift information on a preferred date and time to work for the business operator is received from the job applicant. This shift information is presented to the business operator with the shift information from the inside employee distinguished from the shift information from the outside person with experience and is selected by the business operator. Thus, the business operator can select a job applicant in consideration of his or her attribute. This makes it possible to utilize a person with experience who used to be employed by the business operator.

In addition, different documents required for employment are issued depending on whether a person to actually work is an inside employee, an outside person with experience, or an outside job applicant. This makes it possible to smoothly perform procedures required for short-term employment.

### <4. Example Screen>

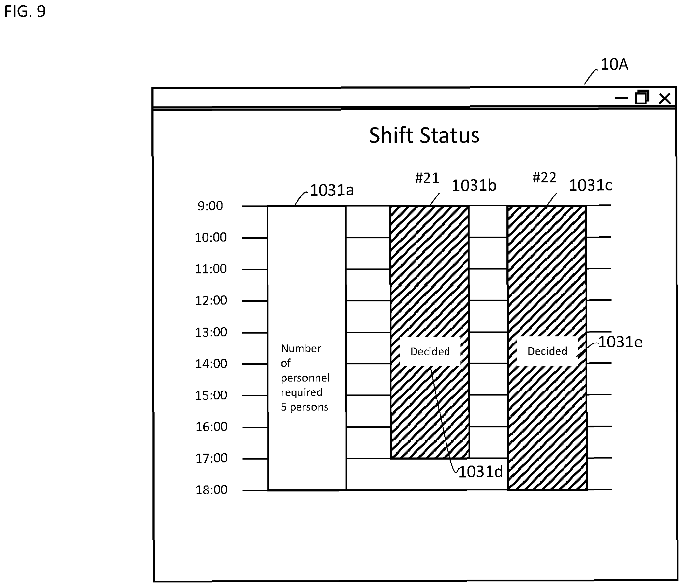

Hereinafter, with reference to FIGS.9 to 11, a description will be given of an example screen for processing of adjusting the shift in the shift adjustment system 1, an example screen for performing additional recruitment for the shift, and an example screen for processing of receiving an application for the additional recruitment for the shift.

FIG.9 is a diagram illustrating an example screen of the terminal device 10A in the shift adjustment process. The example screen of FIG.9 shows an example screen on which a shift status screen for presenting job application information to the business operator to allow selection of a job applicant appears. This example screen corresponds to step S213 in FIG.6.

As shown in FIG.9, the display 132 of the terminal device 10A displays the shift status screen as a shift information list. The shift status screen includes a necessary shift display field 1031a for the business operator, job application information display fields 1031b and 1031c for displaying the job application information, and decision buttons 1031d and 1031e for selecting the job application information. In the necessary shift display field 1031a and the job application information display fields 1031b and 1031c, the shift information and the preferred date and time of work are displayed as a time chart. In the job application information display fields 1031b and 1031c, for example, a preferred working hour entered by the job applicant is displayed as a time chart in an initial state of the screen display, and the business operator, when adjusting the time, can move the positions of the start date and time and the end date and time dragging (or swiping) to set an available time slot. When the business operator makes an entry for adjustment in the job application information display fields 1031b and 1031c and presses the decision buttons 1031d and 1031e, information indicating that the job applicant has been selected by the business operator and job application information on the job applicant are transmitted to the terminal device 10B. This allows the business operator to make an entry for selecting the job application information by operating the terminal device 10A.

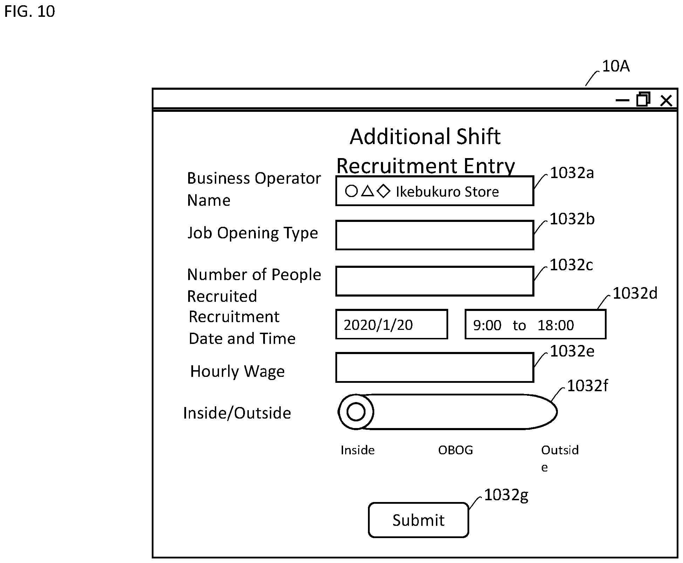

FIG.10 is a diagram illustrating an example screen of the terminal device 10A in the additional recruitment process for the shift. The example screen of FIG.10 shows an example screen on which an entry screen for additional recruitment for the shift information appears in the terminal device 10A of the business operator. This example screen corresponds to step S311 in FIG.7.

As shown in FIG.10, the display 132 of the terminal device 10A displays an additional recruitment entry screen for entering additional recruitment for shift information. The additional recruitment entry screen includes: a business operator name entry field 1032a for entering a business operator name; a job opening type entry field 1032b for entering a job opening type; a recruitment number entry field 1032c for entering the number of people recruited; a recruitment date-and-time entry field 1032d for entering a recruitment date and time; an hourly wage entry field 1032e for entering an hourly wage; an attribute specification field 1032f for specifying scope of attributes to which the additional recruitment information for the shift information is presented; and a submission button 1032g for submitting entered information. In the business operator name entry field 1032a, the business operator name of the business operator authenticated by the sever 20 may be entered in advance. Note that the attribute specification field 1032f may be configured to allow a stepwise entry of a job applicant's attribute or may be configured to allow each individual setting. In addition, the attribute specification field 1032f may be configured to allow not only an entry of the job applicant's attribute as described above but also an entry of conditions such as a geographical range based on, for example, a place of residence of the job applicant, the gender or age of the job applicant, or an hourly wage. The business operator enters various conditions in the business operator name entry field 1032a, the job opening type entry field 1032b, the recruitment number entry field 1032c, the recruitment date-and-time entry field 1032d, the hourly wage entry field 1032e, and the attribute specification field 1032f. Thereafter, by pressing the submission button 1032g, the additional recruitment information for the shift information is submitted to the sever 20. This allows the business operator to enter additional recruitment for the shift information by operating the terminal device 10A when the business operator cannot adjust the shift.

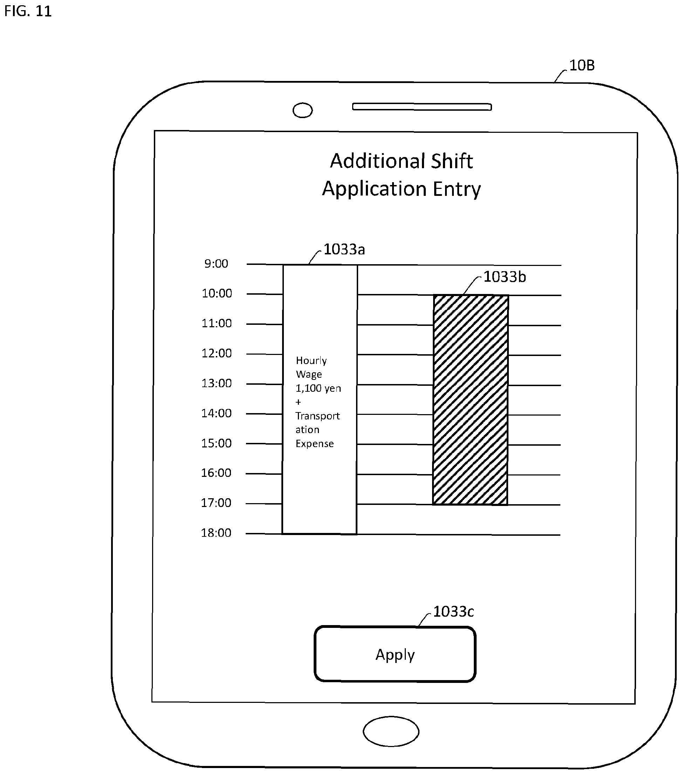

FIG.11 is a diagram illustrating an example screen of the terminal device 10B in the application reception process in response to the additional recruitment for the shift. The example screen of FIG.11 shows an example screen on which an additional recruitment application entry screen appears in order for the job applicant to enter job application information when making an application in response to the additional recruitment for the shift information from the business operator. This example screen corresponds to step S212 in FIG.6.

As shown in FIG.10, the display 132 of the terminal device 10B displays the additional shift application entry screen for entering conditions for making an application in response to the additional recruitment for the shift information from the business operator. The additional shift application entry screen includes an additional shift condition display field 1033a for displaying an additional shift application condition entered by the business operator, a job application information entry field 1033b for entering job application information, an application button 1033c for submitting the entered information. The additional shift condition display field 1033a and the job application information entry field 1033b have the recruitment date and time and the work date and time displayed as time charts. The job application information entry field 1033b is displayed as a time chart with the same time slot as that of the additional shift condition display field 1033a in an initial state of the screen display, for example, and the positions of the start date and time and the end date and time can be moved by dragging (or swiping) to set an available time slot of the job applicant. In addition, it may be configured to allow an entry of an hourly wage or other conditions (presence or absence of a transportation expense, etc.). When the job applicant makes an entry in the job application information entry field 1033b and presses the application button 1033c, the job application information is transmitted to the server 20. This allows the job applicant to enter the job application information by operating the terminal device 10B.

### <Brief Summary>

As described above, according to the present embodiment, the information processing device is configured to store the attribute of the job applicant who wishes to work for the business operator with the inside employee employed by the business operator distinguished from the outside person with experience who used to be employed by the business operator. In response to the receipt of an entry of the shift information related to a preferred date and time to work for the business operator from the job applicant, the shift information is presented to the business operator with the shift information from the inside employee distinguished from the shift information from the outside person with experience. Thus, the business operator can make the selection in consideration of the attribute of the job applicant. This makes it possible to utilize a person with experience who used to be employed by the business operator.

### <Second Embodiment>

Hereinafter, the shift adjustment system 1 for a convenience store will be described.

### <1. Overall Configuration of Shift Adjustment System 1>

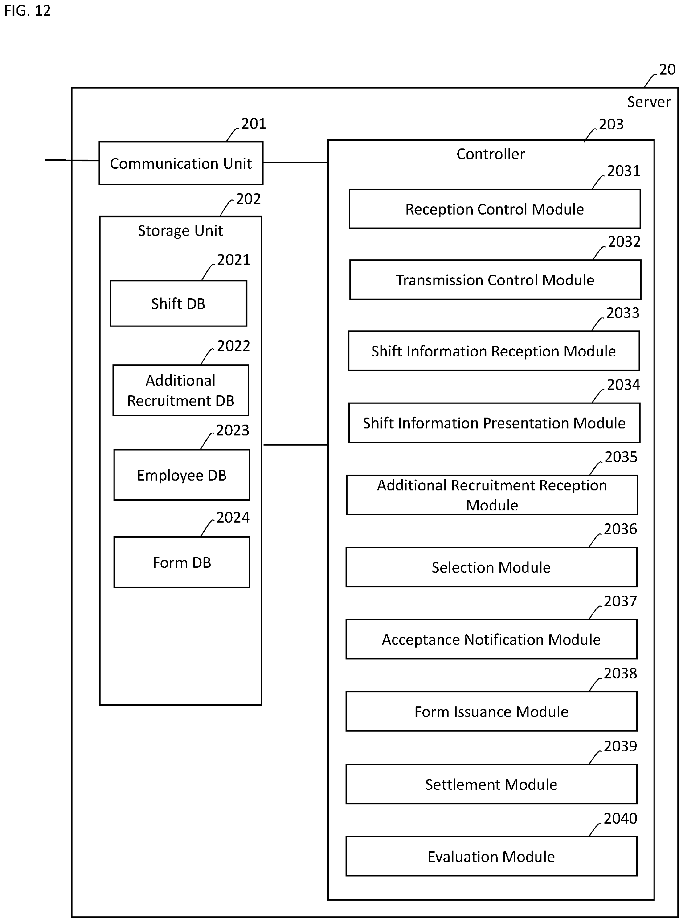

FIG.12 is a diagram illustrating a functional configuration of the server 20 included in the shift adjustment system 1 according to an embodiment 2. The overall configuration of the shift adjustment system 1 and the configuration of the terminal device 10 in the embodiment 2 are similar to those in the embodiment 1, and thus, repetitive descriptions thereof will be omitted. As shown in FIG.13, the configuration of the server 20 is the same as that of the embodiment 1 except that it further includes a function of an evaluation module (evaluation information reception unit) 2040. Hereinafter, the function of the evaluation module 2041 according to the embodiment 2 will be described.

The evaluation module 2040 controls processing of receiving, from the business operator, evaluation information regarding a work status of the job applicant (employed) who has actually worked. For example, the evaluation module 2040 receives an entry indicating how the work status of the job applicant (employed) is rated on a scale from one to five and stores the entry in the employee database 2023.

### <2. Data Structure>

A data structure in the embodiment 2 is similar to that in the embodiment 1, and thus, repetitive descriptions thereof will be omitted.

### <3. Operation>

Hereinafter, with reference to FIG.6, processing of adjusting a shift in the shift adjustment system 1 according to the embodiment 2 that is different from that in the embodiment 1 will be described.

In step S227 shown in FIG.6, after the settlement module 2039 of the sever 20 performs processing of settling a salary or the like, the communication unit 201 of the sever 20 receives the evaluation information from the business operator that is transmitted from the terminal device 10A. The evaluation module 2041 of the server 20 stores the received evaluation information from the business operator in the employee database 2023, thereby registering the evaluation information. The evaluation information can be referred to, for example, in selecting a job applicant to actually work from job applicants.

### <Brief Summary>

As described above, according to the present embodiment, the business operator makes an evaluation of the work status of the job applicant (employed) who has actually worked, and information on the evaluation is stored. This allows the business operator to select a job applicant who better matches the condition by referring to the evaluation information on the job applicant.

Although embodiments according to the disclosure have been described above, the embodiments can be implemented in various other forms with various omissions, substitutions, and changes. These embodiments and modifications as well as those with omissions, substitutions, and changes are included in the technical scope of the claims and the equivalent scope thereof.

### <Additional Notes>

Matters described in the above embodiment will be additionally noted below.

(Note 1) An information processing device including a controller and a storage unit,
the storage unit being configured to store an attribute of a job applicant who wishes to work for a business operator with an inside employee employed by the business operator distinguished from an outside person with experience who used to be employed by the business operator, and
the controller including:
   a shift information reception unit that receives, from the job applicant, an entry of shift information on a preferred date and time to work for the business operator;
   a shift information presentation unit that presents the shift information to the business operator with the shift information from the inside employee distinguished from the shift information from the outside person with experience; and
   a selection unit that receives, from the business operator, an entry of selection information to select the job applicant to actually work based on the presented shift information.

(Note 2) The information processing device according to (Note 1), wherein the storage unit is configured to store an attribute of the outside person with experience with a former inside employee who used to be the inside employee distinguished from a former outside hire who used to be temporarily employed by the business operator.

(Note 3) The information processing device according to (Note 2), wherein the storage unit is configured to store information on a person with no employment experience who wishes to work for the business operator with the inside employee, the former inside employee, and the former outside hire distinguished from each other.

(Note 4) The information processing device according to (Note 2) or (Note 3), wherein the storage unit is configured to store the attribute of the inside employee or the outside person with experience that is changed when the attribute of the job applicant is changed.

(Note 5) The information processing device according to any one of (Note 2) to (Note 4), wherein the controller includes an additional recruitment reception unit that receives, from the business operator, additional recruitment for the shift information to present the additional recruitment to the job applicant, and the shift information reception unit receives, from the job applicant, an entry of the shift information on a preferred shift to work in response to the additional recruitment.

(Note 6) The information processing device according to (Note 5), wherein the additional recruitment reception unit presents the additional recruitment from one business operator such that an inside employee employed by another business operator and an outside person with experience who used to be employed by the other business operator can view the additional recruitment, and
the shift information reception unit receives, from the inside employee employed by the other business operator and the outside person with experience who used to be employed by the other business operator, an entry of the shift information on a preferred shift to work in response to the additional recruitment.

(Note 7) The information processing device according to (Note 5) or (Note 6), wherein the additional recruitment reception unit receives, from the business operator, an entry of selection of any one or more attributes from the inside employee, the former inside employee, and the former outside hire, and presents the additional recruitment for the shift information such that the job applicant corresponding to the selected attribute can view the additional recruitment.

(Note 8) The information processing device according to (Note 7), wherein the additional recruitment reception unit presents the additional recruitment for the shift information to the job applicant stepwise in an attribute order of the inside employee, the former inside employee, and the former outside hire.

(Note 9) The information processing device according to (Note 7) or (Note 8), wherein the additional recruitment reception unit receives, from the business operator, an entry of a change in the selected one or more attributes from the inside employee, the former inside employee, and the former outside hire, and presents the additional recruitment for the shift information such that the job applicant corresponding to the changed attribute can view the additional recruitment.

(Note 10) The information processing device according to any one of (Note 7) to (Note 9), wherein the additional recruitment reception unit receives, from the business operator, an entry of a condition for the additional recruitment for the shift information that is specific to each of the inside employee, the former inside employee, and the former outside hire, and presents the additional recruitment for the shift information such that the job applicant corresponding to the condition can view the additional recruitment.

(Note 11) The information processing device according to any one of (Note 1) to (Note 10), wherein the controller includes an acceptance notification unit that notifies the job applicant selected by the business operator of selection by the business operator.

(Note 12) The information processing device according to any one of (Note 1) to (Note 11), wherein the selection unit automatically selects the job applicant to actually work from the presented information on the job applicant based on a condition for selecting the job applicant that is preset by the business operator.

(Note 13) The information processing device according to any one of (Note 1) to (Note 12), wherein the controller includes a form issuance unit that issues a form required for employment for the job applicant selected by business operator, the form being issued according to whether the job applicant is the inside employee or the outside person with experience.

(Note 14) The information processing device according to any one of (Note 1) to (Note 13), wherein the controller includes a settlement unit that settles a salary payment to the job applicant based on attendance information according to work of the job applicant who has actually worked.

(Note 15) The information processing device according to any one of (Note 1) to (Note 14), wherein the controller includes an evaluation information reception unit that receives an entry of information on an evaluation that is made by the business operator on work of the job applicant who has actually worked, and
the storage unit is configured to store the evaluation information that is associated with the job applicant.

(Note 16) A method to be performed by an information processing device that includes a controller and a storage unit,
the storage unit being configured to store an attribute of a job applicant who wishes to work for a business operator with an inside employee employed by the business operator distinguished from an outside person with experience who used to be employed by the business operator, and
the controller being configured to execute steps of:
   receiving, from the job applicant, an entry of shift information on a preferred date and time to work for the business operator;
   presenting the shift information to the business operator with the shift information from the inside employee distinguished from the shift information from the outside person with experience; and
   receiving, from the business operator, an entry of selection information to select the job applicant to actually work based on the presented shift information.

(Note 17) A program executable by an information processing device that includes a controller and a storage unit,
the storage unit being configured to store an attribute of a job applicant who wishes to work for a business operator with an inside employee employed by the business operator distinguished from an outside person with experience who used to be employed by the business operator, and
the program causing the controller to execute steps of:
   receiving, from the job applicant, an entry of shift information on a preferred date and time to work for the business operator;
   presenting the shift information to the business operator with the shift information from the inside employee distinguished from the shift information from the outside person with experience; and
   receiving, from the business operator, an entry of selection information to select the job applicant to actually work based on the presented shift information.

### REFERENCE SIGNS LIST

10 Terminal device, 20 Server, 30 Job offer information provision server, 80 Network, 130 Operation reception unit (Touch screen), 171 User information, 22 Communication IF, 23 Input/output IF, 25 Memory, 26 Storage, 29 Processor, 201 Communication unit, 202 Storage unit, 2021 Shift database, 2022 Additional recruitment database, 2023 Employee database, 2024 Form database, 203 Controller, 2031 Reception control module, 2032 Transmission control module, 2033 Shift information reception module (Shift information reception unit), 2034 Shift information presentation module (Shift information presentation unit), 2035 Additional recruitment reception module (Additional recruitment reception unit), 2036 Selection module (Selection unit), 2037 Acceptance notification module (Acceptance notification unit), 2038 Form issuance module (Form issuance unit), 2039 Settlement module (Settlement unit), 2040 Evaluation module (Evaluation information reception unit)

## Claims

1. An information processing device comprising a controller and a storage unit,
the storage unit being configured to store an attribute of a job applicant who wishes to work for a business operator with an inside employee employed by the business operator distinguished from an outside person with experience who used to be employed by the business operator, and
the controller comprising:
a shift information reception unit that receives, from the job applicant, an entry of shift information on a preferred date and time to work for the business operator;
a shift information presentation unit that presents the shift information to the business operator with the shift information from the inside employee distinguished from the shift information from the outside person with experience; and
a selection unit that receives, from the business operator, an entry of selection information to select the job applicant to actually work based on the presented shift information.

2. The information processing device according to claim 1, wherein the storage unit is configured to store an attribute of the outside person with experience with a former inside employee who used to be the inside employee distinguished from a former outside hire who used to be temporarily employed by the business operator.

3. The information processing device according to claim 2, wherein the storage unit is configured to store information on a person with no employment experience who wishes to work for the business operator with the inside employee, the former inside employee, and the former outside hire distinguished from each other.

4. The information processing device according to claim 2 or 3, wherein the storage unit is configured to store the attribute of the inside employee or the outside person with experience that is changed when the attribute of the job applicant is changed.

5. The information processing device according to any one of claims 2 to 4, wherein the controller comprises an additional recruitment reception unit that receives, from the business operator, additional recruitment for the shift information to present the additional recruitment to the job applicant, and
the shift information reception unit receives, from the job applicant, an entry of the shift information on a preferred shift to work in response to the additional recruitment.

6. The information processing device according to claim 5, wherein the additional recruitment reception unit presents the additional recruitment from one business operator such that an inside employee employed by another business operator and an outside person with experience who used to be employed by the other business operator can view the additional recruitment, and
the shift information reception unit receives, from the inside employee employed by the other business operator and the outside person with experience who used to be employed by the other business operator, an entry of the shift information on a preferred shift to work in response to the additional recruitment.

7. The information processing device according to claim 5 or claim 6, wherein the additional recruitment reception unit receives, from the business operator, an entry of selection of any one or more attributes from the inside employee, the former inside employee, and the former outside hire, and presents the additional recruitment for the shift information such that the job applicant corresponding to the selected attribute can view the additional recruitment.

8. The information processing device according to claim 7, wherein the additional recruitment reception unit presents the additional recruitment for the shift information to the job applicant stepwise in an attribute order of the inside employee, the former inside employee, and the former outside hire.

9. The information processing device according to claim 7 or claim 8, wherein the additional recruitment reception unit receives, from the business operator, an entry of a change in the selected one or more attributes from the inside employee, the former inside employee, and the former outside hire, and presents the additional recruitment for the shift information such that the job applicant corresponding to the changed attribute can view the additional recruitment.

10. The information processing device according to any one of claims 7 to 9, wherein the additional recruitment reception unit receives, from the business operator, an entry of a condition for the additional recruitment for the shift information that is specific to each of the inside employee, the former inside employee, and the former outside hire, and presents the additional recruitment for the shift information such that the job applicant corresponding to the condition can view the additional recruitment.

11. The information processing device according to any one of claims 1 to 10, wherein the controller comprises an acceptance notification unit that notifies the job applicant selected by the business operator of selection by the business operator.

12. The information processing device according to any one of claims 1 to 11, wherein the selection unit automatically selects the job applicant to actually work from the presented information on the job applicant based on a condition for selecting the job applicant that is preset by the business operator.

13. The information processing device according to any one of claims 1 to 12, wherein the controller comprises a form issuance unit that issues a form required for employment for the job applicant selected by business operator, the form being issued according to whether the job applicant is the inside employee or the outside person with experience.

14. The information processing device according to any one of claims 1 to 13, wherein the controller comprises a settlement unit that settles a salary payment to the job applicant based on attendance information according to work of the job applicant who has actually worked.

15. The information processing device according to any one of claims 1 to 14, wherein the controller comprises an evaluation information reception unit that receives an entry of information on an evaluation that is made by the business operator on work of the job applicant who has actually worked, and
the storage unit is configured to store the evaluation information that is associated with the job applicant.

16. A method to be performed by an information processing device that comprises a controller and a storage unit,
the storage unit being configured to store an attribute of a job applicant who wishes to work for a business operator with an inside employee employed by the business operator distinguished from an outside person with experience who used to be employed by the business operator, and
the controller being configured to execute steps of:
receiving, from the job applicant, an entry of shift information on a preferred date and time to work for the business operator;
presenting the shift information to the business operator with the shift information from the inside employee distinguished from the shift information from the outside person with experience; and
receiving, from the business operator, an entry of selection information to select the job applicant to actually work based on the presented shift information.

17. A program executable by an information processing device that comprises a controller and a storage unit,
the storage unit being configured to store an attribute of a job applicant who wishes to work for a business operator with an inside employee employed by the business operator distinguished from an outside person with experience who used to be employed by the business operator, and
the program causing the controller to execute steps of:
receiving, from the job applicant, an entry of shift information on a preferred date and time to work for the business operator;
presenting the shift information to the business operator with the shift information from the inside employee distinguished from the shift information from the outside person with experience; and
receiving, from the business operator, an entry of selection information to select the job applicant to actually work based on the presented shift information.
